# EUROPEAN PATENT APPLICATION

(11) **EP 4 813 593 A1**
(43) Date of publication of application: **30.09.2026**
(21) Application number: 25848812.1
(22) Date of filing: 23.07.2025
(51) Int. Cl.: B26F 1/12, B26F 1/14, B26D 7/26, B26D 5/02, H01M 4/04, H01M 4/70

(54) **ELECTRODE MANUFACTURING APPARATUS**

(30) Priority: 30.07.2024 KR 20240100654
(71) Applicant: LG Energy Solution, Ltd., Seoul 07335 (KR)
(72) Inventor: KO, Seong Beom, Daejeon 34122 (KR); SHIN, Sung Jong, Daejeon 34122 (KR); SON, Jae Huoung, Daejeon 34122 (KR)
(74) Representative: Plasseraud IP
(86) International application number: PCT/KR2025/010848
(87) International publication number: WO 2026/029469

(57) **Abstract**

The electrode manufacturing device of the present invention comprises a traveling roller for transferring a coated electrode, and a mold part disposed on a traveling path of the coated electrode and arranged to cut a partial region of the coated electrode, wherein the mold part comprises an upper mold disposed at the top of the coated electrode and a lower mold disposed at the bottom of the coated electrode, the upper mold comprises an upper molding jig arranged to cut a partial region of the coated electrode, and one or more first balance members connected to the upper molding jig, and the upper molding jig is disposed so that its center is deflected from the center of the traveling roller in a rotational axis direction.

## Description

### Technical Field

The present invention relates to an electrode manufacturing method and an electrode manufacturing device, and more specifically, relates to an electrode manufacturing method and an electrode manufacturing device, capable of flexibly responding to an electrode length size change of a coated electrode upon electrode tab notching.

This application claims the benefit of priority based on Korean Patent Application No. 10-2024-0100654 dated July 30, 2024, and Korean Patent Application No. 10-2025-0099392 dated July 23, 2025, all the disclosures of which are incorporated herein by reference.

### Background Art

Upon manufacturing secondary battery electrodes, a notching process is performed, to process the electrode into a desired shape. Such a notching process can be broadly divided into two methods, where one is a method in which the electrode is cut using a mold, and the other is a method in which the electrode is cut using a laser. Here, the notching process using a mold is typically performed by a method of pressing the electrode into the mold to cut a portion of the electrode.

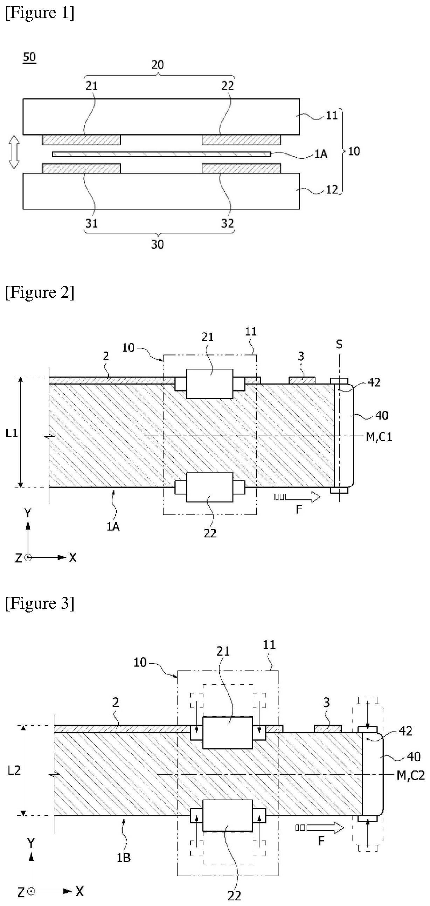

Figure 1 is a diagram schematically showing an electrode notching device according to a conventional art, and Figures 2 and 3 are plan views schematically showing appearances of shaping an electrode using a general mold.

Referring to Figures 1 to 3, a typical electrode notching device (50) for shaping a typical electrode comprises a main mold (10) that an upper mold (11) and a lower mold (12) are disposed to face each other. A coated electrode (1A) is introduced between the upper mold (11) and the lower mold (12) of the main mold (10). The upper mold (11) and the lower mold (12) are installed to be movable in an up-and-down direction (Z-axis direction). Upon the notching process, the upper mold (11) and the lower mold (12) cut a partial region of the introduced coated electrode (1A).

Also, in a general mold device, the upper mold (11) and the lower mold (12) are provided with an upper molding jig (20) and a lower molding jig (30), respectively. The upper molding jig (20) and the lower molding jig (30) perform a role of notching-processing one end and the other end of the coated electrode (1A), respectively. In this instance, the upper molding jig (20) comprises a first one-side mold (21) for shaping one end of the coated electrode in an electrode length direction (Y-axis direction) and a first other-side mold (22) for shaping the other end. Furthermore, the lower molding jig (30) also comprises a second one-side mold (31) and a second other-side mold (32). That is, the first one-side mold (21) and the second one-side mold (31) can form an electrode tab by pressurizing and notching upper and lower surfaces of one lateral of the coated electrode (1A). In addition, the first other-side mold (22) and the second other-side mold (32) can shape the shape of the other lateral of the coated electrode (1A) by pressurizing and notching upper and lower surfaces of the other lateral of the coated electrode (1A).

Furthermore, it is important to minimize vibrations generated upon press operation of the coated electrode (1A), and particularly, it is important to prevent eccentric vibrations upon the notching process. The eccentric vibrations can occur when the center of the main mold (10) and the center of a transfer roller (40, also called a traveling roller) do not coincide. To this end, each center (C1) of the upper mold (11) and lower mold (12) in the main mold (10) is designed to be coaxial with the center (M) of the rotational axis (S) of the transfer roller (40) for transferring the coated electrode (1A). That is, each center (C1) of the upper mold (11) and lower mold (12) is disposed so as not to be eccentric with respect to the center (M) of the rotational axis (S) of the transfer roller (40).

Meanwhile, when production of electrodes with a changed electrode length (L) is required in existing production facilities, the position of the tab formed at one end of the electrode in an electrode length direction also changes. However, in the general mold device (50), there were difficulties in generally applying it to electrodes with various electrode lengths.

Specifically, when the electrode length (L2) of the coated electrode (1B) illustrated in Figure 3 is changed to a smaller size than the electrode length (L1) of the coated electrode (1A) illustrated in Figure 2, a position of a stepped portion (42) formed on the surface of the transfer roller (40) (located at the end in the rotational axis direction (S) of the transfer roller) had to be changed, and accordingly, the arrangement and size of the transfer roller (40), and the like had to be changed. Furthermore, depending on the transfer roller (40) thus changed, its position was changed for each center (C2) of the upper mold (11) and lower mold (12) in the main mold (10) to coincide with the center (M) of the transfer roller (40) in the rotational axis direction, or when it was difficult to apply it only by changing the position, the main mold (10) had to be newly manufactured.

Furthermore, in such a position changing process, the positions of various measuring equipment and marking devices for measuring the electrode position had also to be changed. Consequently, when production of electrodes with changed electrode lengths was required, facility operation rate reduction and cost increase due to facility position change and replacement works occurred.

Therefore, a new type electrode notching device and a method thereof, capable of ensuring a stable notching quality while efficiently replacing a facility to be flexible in changing the electrode length size of the electrode are required.

### Disclosure

### Technical Problem

The present invention aims to solve problems occurring in conventional electrode manufacturing processes.

Specifically, through one example of the present invention, it is intended to provide an electrode manufacturing method and an electrode manufacturing device, capable of flexibly responding to a position change of an electrode tab depending on an electrode length change of an electrode by adjusting a center position of a mold part through a balance member.

Specifically, through one example of the present invention, it is intended to provide an electrode manufacturing method and an electrode manufacturing device, capable of disposing centers of an upper molding jig and a lower molding jig, which cut a partial region of a coated electrode, to be deflected based on a center of a traveling roller in a rotational axis direction, and adjusting a center position of a mold part through a balance member. Through this, it is intended to significantly improve a production efficiency while maintaining an electrode quality.

Furthermore, through one example of the present invention, it is intended to provide an electrode manufacturing method and an electrode manufacturing device, capable of effectively responding to an eccentricity amount change of a mold part.

### Technical Solution

To achieve the above-described objects, according to one example of the present invention, a device for manufacturing a secondary battery electrode provided with an electrode tab by notching a coated electrode is provided.

An electrode manufacturing device related to one example of the present invention comprises a traveling roller for transferring a coated electrode and a mold part disposed on a traveling path of the coated electrode and arranged to cut a partial region of the coated electrode. The mold part is arranged to perform a notching process, such as a process of cutting a partial region of the coated electrode to shape an electrode tab on an uncoated portion of the coated electrode.

Also, the mold part comprises an upper mold disposed at the top of the coated electrode and a lower mold disposed at the bottom of the coated electrode. The lower mold is arranged to cut a partial region of the coated electrode together with the upper mold.

Furthermore, the upper mold comprises an upper molding jig arranged to cut a partial region of the coated electrode, and one or more first balance members connected to the upper molding jig. The first balance member does not perform cut-processing of the coated electrode, and as one example, the first balance member is arranged so as not to contact the coated electrode upon the notching process.

In addition, the upper molding jig is disposed so that its center is deflected from the center of the traveling roller in a rotational axis direction. Specifically, the upper molding jig is disposed so that its center (or gravity center) is deflected to one side along the rotational axis direction of the traveling roller without being arranged coaxially with the center of the traveling roller in the rotational axis direction. In this document, the meaning of 'being coaxially aligned with' shows that the center of the upper molding jig is located on an imaginary axis (orthogonal to the rotational axis direction of the traveling roller) that passes through the center of the traveling roller in the rotational axis direction and is parallel to the traveling direction of the traveling roller.

Also, the upper mold may be arranged so that its center is arranged coaxially with the center of the traveling roller in the rotational axis direction. The first balance member performs a function of moving the center (or gravity center) of the upper mold along the electrical length direction (rotational axis direction of the traveling roller) of the coated electrode. The first balance member may be aligned parallel to the upper molding jig along the electrical length direction of the coated electrode.

Furthermore, the first balance member may be detachably mounted to the upper molding jig.

In addition, the lower mold may comprise a lower molding jig arranged to cut a partial region of the coated electrode, and one or more second balance members connected to the lower molding jig.

Also, the lower molding jig may be disposed so that its center is deflected from the center of the traveling roller in the rotational axis direction.

Furthermore, the lower mold may be arranged so that its center is arranged coaxially with the center of the traveling roller in the rotational axis direction. The second balance member performs a function of moving the center (or gravity center) of the lower mold along the electrode length direction (rotational axis direction of the traveling roller) of the coated electrode. The second balance member may be arranged parallel to the lower molding jig along the electrode length direction of the coated electrode.

The upper molding jig and the lower molding jig may be disposed so that each center is deflected toward one side where an uncoated portion of the coated electrode for an electrode tap to be formed is located.

Also, each center of the upper mold and the lower mold may be arranged coaxially.

Furthermore, the second balance member may be detachably mounted to the lower molding jig.

In addition, the upper molding jig may comprise a first one-side mold arranged on one side of the coated electrode to shape an electrode tab on one end of the coated electrode, and a first other-side mold arranged on the other side of the coated electrode to shape the other end of the coated electrode.

Also, the lower molding jig may comprise a second one-side mold arranged on one side of the coated electrode to shape an electrode tab on one end of the coated electrode, and a second other-side mold arranged on the other side of the coated electrode to shape the other end of the coated electrode.

Furthermore, the first and second balance members may each be provided in multiple members. In this instance, the multiple first balance members may be arranged to be connectable to each other, and the multiple second balance members may be arranged to be connectable to each other. In this document, the first and second balance members may have the same shape and weight, and may be used as terms for distinguishing balance members connected to the upper molding jig and the lower molding jig, respectively. In addition, in this document, the term balance member may also be used to refer to both the first and second balance members.

In addition, the upper molding jig and the first balance member may be connected to each other using a connecting member. Similarly, the lower molding jig and the second balance member may also be connected to each other using a connecting member.

Also, the upper mold may comprise a distance adjustment member provided between the upper molding jig and the first balance member, and arranged to adjust a gap between the upper molding jig and the first balance member. Furthermore, the gap between the upper molding jig and the first balance member may also be adjusted by the distance adjustment member, and the center of the upper mold may move along the electrode length direction of the coated electrode according to the gap.

Furthermore, the lower mold may comprise a distance adjustment member provided between the lower molding jig and the second balance member, and arranged to adjust the gap between the lower molding jig and the second balance member. The gap between the lower molding jig and the second balance member may also be adjusted by the distance adjustment member, and the center of the lower mold may move along the electrode length direction of the coated electrode according to the gap.

An electrode manufacturing device related to another example of the present invention comprises a traveling roller for transferring a coated electrode, and a mold part arranged on a traveling path of the coated electrode and arranged to cut a partial region of the coated electrode, wherein the mold part comprises an upper mold disposed at the top of the coated electrode and a lower mold disposed at the bottom of the coated electrode.

Also, the upper mold comprises an upper molding jig arranged to cut a partial region of the coated electrode, and the lower mold comprises a lower molding jig arranged to cut a partial region of the coated electrode together with the upper molding jig.

Furthermore, the mold part is arranged so that its center is arranged coaxially with the center of the traveling roller in the rotational axis direction, and each center of the upper molding jig and the lower molding jig may be disposed to be deflected based on the center of the traveling roller in the rotational axis direction.

In addition, the upper molding jig and the lower molding jig may be disposed so that each center is deflected toward a direction where an uncoated portion of the coated electrode for an electrode tab to be formed is located.

Also, the upper molding jig may comprise a first one-side mold arranged on one side of the coated electrode to shape an electrode tab on one end of the coated electrode, and a first other-side mold arranged on the other side of the coated electrode to shape the other end of the coated electrode. In addition, the lower molding jig may comprise a second one-side mold arranged on one side of the coated electrode to shape an electrode tab on one end of the coated electrode, and a second other-side mold arranged on the other side of the coated electrode to shape the other end of the coated electrode.

Furthermore, the mold part may further comprise a balance member connected to at least one of the upper molding jig and the lower molding jig.

In addition, the balance member may be detachably mounted to at least one of the upper molding jig and the lower molding jig.

Also, the first one-side mold and the second one-side mold may be disposed at one end of the coated electrode. As one example, the first one-side mold and the second one-side mold may be aligned and disposed based on a stepped portion having a relatively recessed surface of the surfaces of the traveling roller facing the coated electrode. The stepped portion may mean a region where the diameter of the traveling roller varies along the rotational axis of the traveling roller. In addition, the first other-side mold and the second other-side mold may be aligned and disposed based on the other end of the coated electrode.

The balance member performs a function of compensating for the eccentricity of the upper molding jig and the lower molding jig, and moving the centers of the upper mold and the lower mold.

The balance member may be provided in multiple members, and the multiple balance members may be provided to be connectable to each other.

At least one of the upper molding jig and the lower molding jig, and the balance member may be connected to each other using a connecting member.

Also, a distance adjustment member may be provided between at least one of the upper molding jig and the lower molding jig, and the balance member connected thereto.

Furthermore, according to another example of the present invention, a method for manufacturing a secondary battery electrode provided with an electrode tab by notching a coated electrode may be provided, and the electrode manufacturing method may be performed using the electrode manufacturing device.

In addition, an electrode manufacturing method related to one example of the present invention comprises a transfer step of transferring a coated electrode by a traveling roller, and a notching step of press-forming an electrode using a mold part comprising an upper mold disposed at the top of the coated electrode and a lower mold disposed at the bottom of the coated electrode to shape an electrode tab on the coated electrode. Also, the upper mold comprises an upper molding jig arranged to cut a partial region of the coated electrode and one or more first balance members connected to the upper molding jig. Furthermore, the lower mold may comprise a lower molding jig arranged to cut a partial region of the coated electrode and one or more second balance members connected to the lower molding jig. In addition, the upper molding jig and the lower molding jig are disposed such that each center is deflected based on the center of the traveling roller in the rotational axis direction. Furthermore, each center of the upper mold and the lower mold may be arranged coaxially.

### Advantageous Effects

As discussed above, the electrode manufacturing device and the electrode manufacturing method related to at least one example of the present invention have the following effects.

It is possible to flexibly respond to electrode length changes of the coated electrode, and it is possible to prevent facility operation rate reduction and cost increase due to frequent position adjustments of the traveling roller or mold.

Also, by combining and arranging the balance members in various ways, it is possible to resolve the eccentric vibration problem occurring during the electrode notching process, and it is possible to ensure higher levels of dimensional accuracy and productivity.

Furthermore, by having flexibility capable of responding to various eccentric amounts of the traveling roller and mold parts, it is possible to increase versatility of the equipment.

In addition, the electrode manufacturing device according to one example of the present invention can implement a dynamic eccentricity compensation system capable of responding to eccentric amount changes of the mold parts by comprising a distance adjustment member. Through this, it can flexibly cope with various variables capable of occurring during the electrode manufacturing process, so that ultimately, it is possible to contribute to electrode quality improvement and productivity increase.

### Description of Drawings

Figure 1 schematically shows a front appearance of a mold for shaping a typical coated electrode.
Figures 2 and 3 are plan views schematically showing an appearance of shaping a coated electrode using a typical mold.
Figure 4 is a partial side view schematically showing a partial appearance of an electrode assembly in which electrodes manufactured by an electrode manufacturing device according to one example of the present invention are included.
Figure 5 is a side view schematically showing an appearance of shaping a coated electrode using an electrode manufacturing device according to one example of the present invention.
Figure 6 is a plan view schematically showing an appearance of shaping a coated electrode using an electrode manufacturing device according to a first example of the present invention.
Figure 7 is a plan view schematically showing an appearance of shaping a coated electrode using an electrode manufacturing device according to a second example of the present invention.
Figure 8 is a plan view schematically showing an appearance of shaping a coated electrode using an electrode manufacturing device according to a third example of the present invention.
Figure 9 is a plan view schematically showing an appearance of shaping a coated electrode using an electrode manufacturing device according to a fourth example of the present invention.
Figure 10 is a plan view schematically showing an appearance of shaping a coated electrode using an electrode manufacturing device according to a fifth example of the present invention.
Figure 11 is a flowchart showing steps of an electrode manufacturing method according to one example of the present invention.
Figure 12 is a plan view schematically showing an appearance of a secondary battery manufactured using an electrode manufacturing device and an electrode manufacturing method of the present invention.

### Mode for Invention

Hereinafter, an electrode manufacturing device and an electrode manufacturing method for a secondary battery, according to one example of the present invention, will be described in detail with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

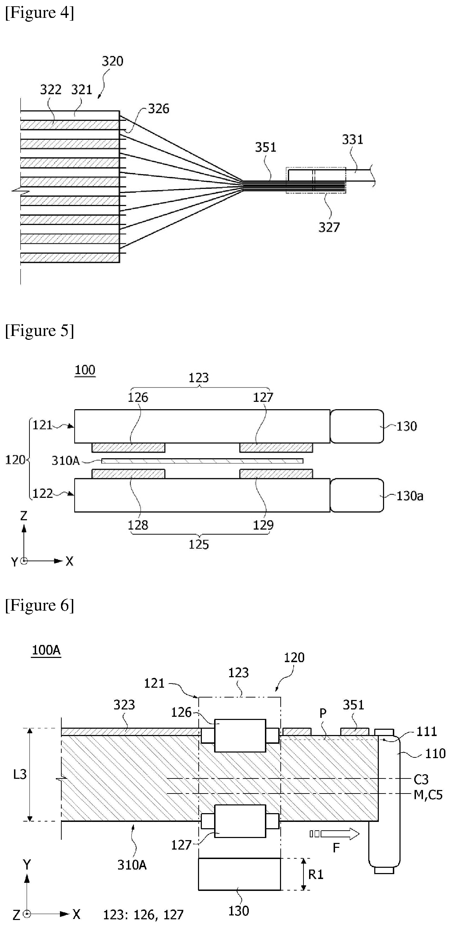

Figure 4 is a partial side view schematically showing an appearance of an electrode assembly (320) in which electrodes (321, 323) manufactured by an electrode manufacturing device (100) according to one example of the present invention are included, and Figure 5 is a side view schematically showing an appearance of shaping a coated electrode (310) using an electrode manufacturing device (100) according to one example of the present invention.

Referring to Figures 4 and 5, an electrode manufacturing device (100) according to one example of the present invention is a device for manufacturing a secondary battery electrode (321) provided with an electrode tab (351) by notching a coated electrode (310A).

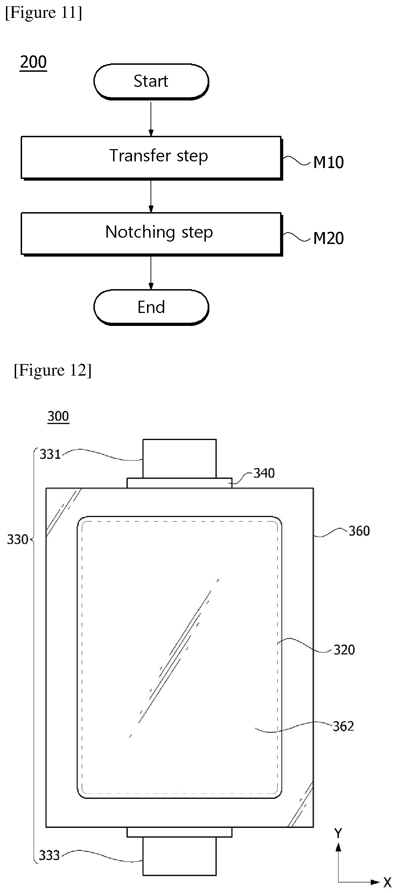

Referring to Figure 4, the secondary battery electrodes (321, 322) are partial constitutions of an electrode assembly (320) as in Figure 4. Specifically, the electrode assembly (320) may comprise a positive electrode (321), a negative electrode (322), and a separator (326) interposed between the positive electrode (321) and the negative electrode (322). In this document, the electrode (321, 322) may be a positive electrode (321) or a negative electrode (322). The secondary battery (300, see Figure 12) has a positive electrode tab (351) and a negative electrode tab (not shown) provided on the positive electrode (321) and the negative electrode (322), respectively. Then, the positive electrode tab (351) and the negative electrode tab may be connected to a positive electrode lead (331) and a negative electrode lead (not shown), respectively, through welding or the like. In this document, the term electrode tab may refer to a positive electrode tab or a negative electrode tab.

Figure 6 is a plan view schematically showing an appearance of shaping a coated electrode (310A) using an electrode manufacturing device according to a first example of the present invention.

Referring to Figures 5 and 6, the electrode manufacturing device (100, 100A) of the present invention comprises a traveling roller (110) for transferring a coated electrode (310A). Here, the coated electrode (310A) means a constitution in which an electrode active material is coated on the surface of a current collector. Thereafter, the coated electrode (310A) shaped by the electrode manufacturing device (100) of the present invention may ultimately be used as an electrode (321, 322) of an electrode assembly (320).

The traveling roller (110) may continuously transfer the sheet-shaped coated electrode (310A). A rotational speed and a transfer speed of the traveling roller (110) may be appropriately set depending on the manufacturing conditions of the coated electrode (310A). In addition, as a material of the traveling roller (110), rubber or urethane, and the like, which has excellent frictional force with the coated electrode (310A), may be used. The traveling roller (110) may transfer the coated electrode (310A) along a traveling direction (F), and the traveling direction (F) may be orthogonal to the rotational axis direction of the traveling roller.

The electrode manufacturing device (100, 100A) of the present invention comprises a mold part (120) for pressing the coated electrode (310A) in the notching process. Specifically, the mold part (120) comprises an upper mold (121) and a lower mold (122). The mold part (120) is disposed on the traveling path of the coated electrode (310A).

Also, the upper mold (121) comprises an upper molding jig (123) arranged to cut a partial region of the coated electrode (310A), and one or more first balance members (130) connected to the upper molding jig (123). The first balance member (130) does not perform cut-processing of the coated electrode (310A), and as one example, upon the notching process, the first balance member (130) is arranged so as not to contact the coated electrode (310A).

Furthermore, the lower mold (122) comprises a lower molding jig (125) arranged to cut a partial region of the coated electrode (310A). At this time, the centers (C3) of the upper molding jig (123) and the lower molding jig (125) are disposed to be deflected based on the center (M) of the traveling roller (110) in the rotational axis direction. In addition, the lower mold (122) comprises one or more second balance members (130a) connected to the lower molding jig (125).

Here, each center (C3) of the upper molding jig (123) and the lower molding jig (125) means the center of the mold part (120) in the length direction (Y-axis direction, electrode length direction of the coated electrode, or rotational axis direction of the traveling roller), which may be identical to the electrode length direction of the coated electrode (310A) in which an uncoated portion is formed at both side edges. Also, in this document, the center (C5) of the mold part (120), and the centers (C3) of the upper molding jig (123) and the lower molding jig (125) may each mean a gravity center. Furthermore, the center of the mold part (120), the center of the upper mold (121), and the center of the lower mold (123) may be arranged to coincide, and the center of the mold part (120), the center of the upper mold (121), and the center of the lower mold (123) may be arranged coaxially.

Here, the 'disposed to be deflected' means that the centers (C3) of the upper molding jig (123) and the lower molding jig (125) in the mold part (120) are disposed to be spaced apart from the center (M) of the traveling roller (110) in the rotational axis direction at a predetermined distance toward the formation position of the electrode tab (351) along the electrode length direction (Y-axis direction) of the coated electrode (310A).

Also, the mold part (120) is configured to shape the electrode tab (351) on the coated electrode (310A). Specifically, when the upper mold (121) descends to press the coated electrode (310A), the lower mold (122) may support it. The press pressure and speed of the mold part (120) may be set in consideration of the material and thickness of the coated electrode (310A), the desired pattern, and the like. Through this configuration, the electrode manufacturing device (100) of the present invention can effectively respond to the electrode length changes of the coated electrode (310A) or the position changes of the electrode tab (351) by coinciding the center (C5) of the mold part (120) with the center (M) of the traveling roller (110) through the first and second balance members (130, 130a). Accordingly, it is possible to suppress productivity decrease and cost increase due to frequent replacement and adjustment of rollers or molds, and it is more stable and efficient.

Furthermore, each center (C3) of the upper molding jig (123) and the lower molding jig (125) may be disposed to be deflected toward one side where the uncoated portion (323) on which the electrode tab (351) of the coated electrode (310A) is to be formed is located.

Specifically, the electrode tab (351) is a protruding portion formed at one end of the coated electrode (310A), where the position of the electrode length direction changes according to the electrode length (L3) of the coated electrode (310A). At this time, even when the centers (C3) of the upper molding jig (123) and the lower molding jig (125) do not coincide with the center of the traveling roller (110) for transferring the coated electrode (310A), the center of the mold part (120) and the center of the traveling roller (110) must be arranged coaxially whenever the position of the electrode tab (351) in the electrode length direction (Y-axis direction) changes.

Therefore, in order to solve the problems of the conventional art, the electrode manufacturing device (100, 100A) of the present invention can arrange the center of the mold part (120) coaxially with the center of the traveling roller (110) through the first and second balance members (130, 130a) when the centers (C3) of the upper molding jig (123) and the lower molding jig (125) are disposed to be deflected at a position off the center (M) of the traveling roller (110), i.e., the uncoated portion (323) where the electrode tab (351) is formed. Therefore, even when the electrode length of the coated electrode (310A) is changed, the arrangement change of the mold part (120) can be minimized, and the electrode shaping process can be performed without the position change of the existing traveling roller (110) or replacement work with a new traveling roller.

Meanwhile, the upper molding jig (123) may comprise a first one-side mold (126) and a first other-side mold (127). In addition, the lower molding jig (125) may comprise a second one-side mold (128) and a second other-side mold (129).

Referring to Figures 5 and 6, the first one-side mold (126) and the first other-side mold (127) provided on the upper mold (121) may be disposed and provided to be spaced apart from each other along the electrode length direction (y-axis direction) of the coated electrode (310A). In addition, the second one-side mold (128) and the second other-side mold (129) provided on the lower mold (125) may be disposed and provided to be spaced apart from each other along the electrode length direction (y-axis direction) of the coated electrode (310A).

The coated electrode (310A) may have a coated portion and two uncoated portions positioned on both sides of the coated portion, respectively. The two uncoated portions may be positioned at one end and the other end of the coated electrode (310A), respectively, in the electrode length direction (y-axis direction).

The first one-side mold (126) may be disposed on one end of the coated electrode (310A) in the electrode length direction (Y-axis direction) where the electrode tab (351) is to be formed, to shape the electrode tab (351). For example, the first one-side mold (126) may be disposed on the uncoated portion (323, also referred to as the first uncoated portion) located on one side of the coated electrode (310A). This is so that the first one-side mold (126) shapes the electrode tab (351) on the uncoated portion (323). To this end, the first one-side mold (126) may have a mold pattern that matches the shape of the electrode tab (351). For example, it may include a rectangular pattern for shaping a rectangular electrode tab (351).

Also, the second one-side mold (128) provided on the lower mold (122) may be disposed on one end of the coated electrode (310A) in the electrode length direction (Y-axis direction) where the electrode tab (351) is to be formed, to shape the electrode tab (351). That is, the second one-side mold (128) may be disposed at a position being engageable with the first one-side mold (126) in a vertical direction.

Furthermore, the first other-side mold (127) may be disposed on the other end of the coated electrode (310A) to shape the other end (the uncoated portion of the other end) of the coated electrode (310A) in the electrode length direction (Y-axis direction). This may be used to cut or shape the other end of the coated electrode (310) into a desired shape. For example, a task, such as a process of removing burrs or the like from the tip of the other end of the coated electrode (310 A) to shape it cleanly, or cutting the other end of the coated electrode (31 A 0) into a specific pattern, may be performed.

In addition, the second other-side mold (129) provided on the lower mold (122) may be disposed on the other end of the coated electrode (310A) to shape the other end of the coated electrode (310A) in the electrode length direction (Y-axis direction). That is, the second other-side mold (129) may be disposed at a position being engageable with the first other-side mold (127) in a vertical direction.

Also, the centers (C3, center of the upper molding jig) of the first one-side mold (126) and the first other-side mold (127) and the centers (C3, center of the lower molding jig) of the second one-side mold (128) and the second other-side mold (129) may be disposed to be deflected based on the center (M) of the traveling roller (110) in the rotational axis direction. Specifically, the centers of the first one-side mold (126) and the first other-side mold (127) belonging to the upper mold (121) and the centers of the second one-side mold (128) and the second other-side mold (129) belonging to the lower mold (125) may be deflected by the same distance from the center (M) of the traveling roller (110) in the rotational axis direction.

As one example, the first one-side mold (126) and the second one-side mold (128) may be aligned and disposed based on a stepped portion (111) having a relatively recessed surface among the surfaces facing the coated electrode (310A) of the traveling roller (110). The first other-side mold (127) and the second other-side mold (129) may be aligned and disposed based on the other end of the coated electrode (310A). Here, the stepped portion (111) has a shape in which the surface of the roller at a position facing the electrode tab (351) is lower than the height of the surface of the roller facing the remaining portion of the coated electrode (310A).

Specifically, the stepped portion (111) means a boundary of a portion that the roller thickness is formed to be thinner than other portions. For example, the stepped portion (111) may have a stepped size of 1 µm to 5 µm or so. Such a stepped portion (111) is disposed on the pass line (P) through which the electrode tab (351) passes, whereby it is possible to prevent occurrence of flipping upon transfer of the tab portion.

An electrode manufacturing device (100, 100A) related to one example of the present invention may comprise first and second balance members (130, 130a), to compensate for the eccentricity of the deflected upper molding jig (123) and lower molding jig (125).

The first and second balance members (130, 130a) perform a role of coinciding the gravity center of the mold part (120) with the center (M) of the traveling roller (110). For example, the first and second balance members (130, 130a) may be manufactured from the same material as that of the mold part (120) to have the same thickness. Referring to Figures 5 and 6, the first and second balance members (130, 130a) may be connected to the opposite sides (i.e., the sides opposite to the direction where the electrode tab is formed) of the deflection of the upper molding jig (123) and the lower molding jig (125), respectively.

For example, when the upper molding jig (123) and the lower molding jig (125) are deflected to be spaced apart by 10 mm in the electrode length direction at a position where the center (M) of the mold part (120) and the center (M) of the traveling roller (110) coincide with each other, that is, a position where the center (M) of the mold part (120) and the center (M) of the traveling roller (110) are arranged coaxially, the first and second balance members (130, 130a) may be installed to extend 10 mm in the opposite direction of the deflection from the center (M) of the traveling roller (110). Accordingly, the eccentric pressure-bonding force of the coated electrode (310A) generated by the upper molding jig (123) and the lower molding jig (125) is balanced by the first and second balance members (130, 130a).

Referring to Figures 5 and 6, the center (C5) of the mold part (120) to which the first and second balance members (130, 130a) are coupled may be disposed coaxially with the center (M) of the traveling roller (110) in the rotational axis direction. Through this, it is possible to stably maintain a horizontal balance of the mold part (120), thereby applying a uniform pressure to the coated electrode (310A).

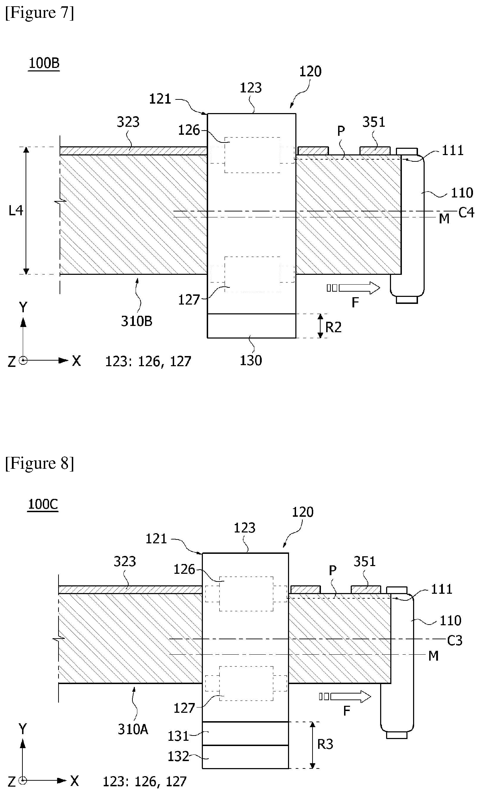

Figure 7 is a plan view schematically showing an appearance of shaping a coated electrode (310B) using an electrode manufacturing device (100B) according to a second example of the present invention. Hereinafter, in each example, the first balance member (130) and the second balance member (130a) may have the same size and structure. Also, in the upper molding jig and the lower molding jig, their respective gravity centers may be disposed at symmetrical positions based on the coated electrode. Furthermore, in the upper mold (121) and the lower mold (122) to which the first balance member (130) and the second balance member (130a) are coupled, their respective gravity centers may be disposed at symmetrical positions based on the coated electrode. For convenience of explanation, in each example, only the upper mold (121) and the first balance member (130) may be illustrated in the drawings.

Referring to Figures 6 and 7, the electrode length (L4) of the coated electrode (310B) illustrated in Figure 7 is formed to have a size longer than the electrode length (L3) of the coated electrode (310) illustrated in Figure 6. Therefore, compared to the electrode manufacturing device (100A) of Figure 6, the arrangement of the first one-side mold (126) and the second one-side mold (127) is the same along the rotational axis direction of the traveling roller (110), but the arrangement of the first other-side mold (128) and the second other-side mold (129) may differ.

Also, each center (C4) of the upper molding jig (123) and the lower molding jig (125) of the electrode manufacturing device (100B) according to the second example of the present invention is disposed to be deflected based on the center (M) of the traveling roller (110) in the rotational axis direction. Each center (C4) of the upper molding jig (123) and the lower molding jig (125) of the electrode manufacturing device (100B) according to the second example of the present invention may have a different position, compared with each center (C3) of the upper molding jig (123) and the lower molding jig (125) of the electrode manufacturing device (100A) illustrated in Figure 6, because the arrangements of the first other-side mold (128) and the second other-side mold (129) have been changed.

Furthermore, the electrode manufacturing device (100B) of Figure 7 may have the same arrangement and size of the traveling roller (110) as the traveling roller (110) of the electrode manufacturing device (100A) illustrated in Figure 6. As such, compared with the fact that in the conventional electrode manufacturing device, both the size and position of the traveling roller must be changed, the present invention can utilize the existing traveling roller

(110) as is, whereby there is an advantage capable of reducing a facility cost and an installation time.

In addition, in the electrode manufacturing device (100B) of Figure 7, compared with the electrode manufacturing device (100A) of Figure 6, the length (R2) of the first balance member (130) as illustrated in Figure 7 in the electrode length direction (Y-axis direction) may be shorter than the length (R1) of the first balance member (130) as illustrated in Figure 6. Referring to Figures 5 and 7, the first and second balance members (130, 130a) may have a protrusion length of the electrode length direction as appropriately set according to the eccentric amount.

Figure 8 is a plan view schematically showing an appearance of shaping a coated electrode (310A) using an electrode manufacturing device (100C) according to a third example of the present invention.

Compared with the electrode manufacturing device (100A) of Figure 6, referring to Figures 5 and 8, the electrode manufacturing device (100C) according to the third example of the present invention may be provided with multiple first and second balance members (130, 130a). In addition, the multiple first balance members (130) may be provided to be connectable to each other, and the multiple second balance members (not shown) may be provided to be connectable to each other.

Referring to Figures 5 and 8, the first and second balance members (130, 130a) may each comprise a first member (131) and a second member (132). The total length (R3) of the first member (131) and the second member (132) in the electrode length direction (Y-axis direction) may be designed to have a length corresponding to the eccentric amount. For example, when the eccentric amount of the upper molding jig and the lower molding jig is 20 mm, the length of the first member (131) may be set to 12 mm, and the length of the second member (132) may be set to 8 mm.

At this time, the first member (131) and the second member (132) may be detachably connected to each other by a method such as forced-fit coupling. Through this, it is possible to flexibly adjust the lengths of the first and second members (131, 132) in accordance with the eccentric amount changes of the upper molding jig and the lower molding jig. For example, when the eccentric amount has been reduced to 12 mm, it is possible to implement a compensation structure optimized for the changed eccentric amount by removing the second member (132) and using only the first member (131).

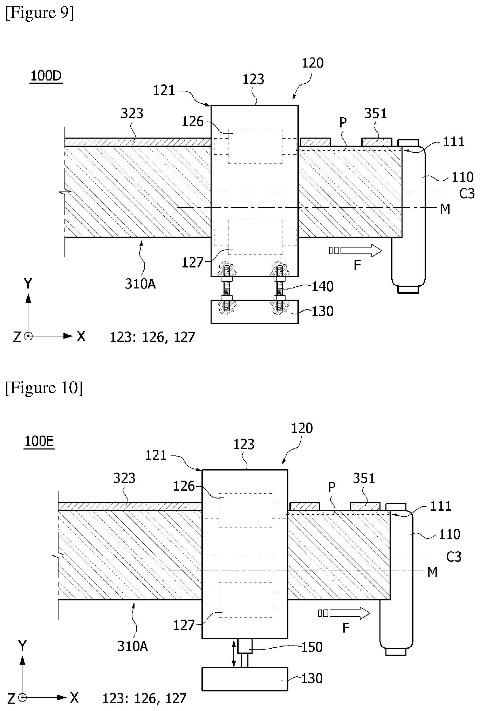

Figure 9 is a plan view schematically showing an appearance of shaping an electrode using an electrode manufacturing device (100D) according to a fourth example of the present invention.

Referring to Figure 9, in the electrode manufacturing device (100D) according to the fourth example of the present invention, compared with the electrode manufacturing device (100A) of Figure 6, the upper molding jig (123) and the first balance member (130) may be connected to each other using a connecting member (140).

Specifically, the connecting member (140) may be positioned between the upper molding jig (123) and the first balance member (130), and thus arranged to mechanically couple them. For example, the connecting member (140) may be provided with various fastening elements such as bolts, nuts, and clamps. For example, a bolt hole may be formed on each central axis of the upper molding jig (123) and the balance member (130), and a firm connecting structure may be obtained by inserting the end of a bolt into each bolt hole and fixing it with a nut.

Furthermore, the connecting member (140) may also be utilized to adjust a relative position of the upper molding jig (123) and the first balance member (130). Specifically, the present invention may change the relative position of the first balance member (130) with respect to the upper molding jig (123) by changing an insertion position of the bolt penetrating the connecting member (140) with respect to the bolt hole. Through this, it is possible to finely adjust the eccentricity compensation amount.

Figure 10 is a plan view schematically showing an appearance of shaping a coated electrode (310) using an electrode manufacturing device (100E) according to a fifth example of the present invention.

Referring to Figure 10, the electrode manufacturing device (100E) according to the fifth example of the present invention may comprise a distance adjustment member (150). Specifically, the distance adjustment member (150) may be provided to adjust a separation distance between the first balance member (130) and the upper molding jig (123). To this end, the distance adjustment member (150) may be provided between the upper molding jig (123) and the first balance member (130).

The distance adjustment member (150) is mounted on any one of or both the upper molding jig (123) and the first balance member (130), whereby it is possible to change the separation distance therebetween. To this end, the distance adjustment member (150) may comprise various driving elements, such as a motor, a cylinder, or an actuator.

For example, by mounting a linear actuator thereon as the distance adjustment member (150), and controlling the same, it is possible to move the first balance member (130) forward or backward in the electrode length direction (Y-axis direction) of the coated electrode (310A). In this instance, by adjusting the displacement of the linear actuator, it is possible to continuously vary the eccentricity compensation amount.

Figure 11 is a flowchart illustrating steps of an electrode manufacturing method (200) according to one example of the present invention.

Referring to Figures 4 to 11, the electrode manufacturing method (200) according to the present example is a method for manufacturing a secondary battery electrode (321) provided with an electrode tab (351) by notching a coated electrode (310A, 310B).

Specifically, the electrode manufacturing method (200) according to the present example largely comprises a transfer step (M10) and a notching step (M20).

First, in the transfer step (M10), the coated electrode (310A) is transferred by the traveling roller (110). The coated electrode (310A) may be provided in the form of a roll, or may be provided in the form of a sheet. The traveling roller (110) may continuously transfer the coated electrode (310A). The transfer speed may be adjusted according to subsequent processes.

Next, in the notching step (M20), the coated electrode (310) is pressed using a mold part (120) in which the eccentric amount is adjusted by the first and second balance members (130, 130a). As described above, the deflected arrangement of the upper molding jig (123) and the lower molding jig (125) may maintain the arrangement of the traveling roller (110) even if the position of the electrode tab (351) changes according to changes in the electrode length of the coated electrode (310).

The mold part (120) used in the notching step (M20) comprises an upper mold (121) and a lower mold (122). Each center (C3) of the upper molding jig (123) and the lower molding jig (125) is disposed to be deflected based on the center (M) of the traveling roller (110) in the rotational axis direction.

Also, the centers (C3) of the upper molding jig (123) and the lower molding jig (125) of the present invention may be disposed to be deflected toward one side where the uncoated portion (323) on which the electrode tab (351) of the coated electrode (310) is to be formed is located.

Furthermore, the upper molding jig (123) may comprise a first one-side mold (126) and a first other-side mold (127). In addition, the lower molding jig (125) may comprise a second one-side mold (128) and a second other-side mold (129).

In addition, the centers (C3) of the first one-side mold (126) and the first other-side mold (127) and the centers (C3) of the second one-side mold (128) and the second other-side mold (129) may be disposed to be deflected based on the center (M) of the traveling roller in the rotational axis direction.

Furthermore, the first one-side mold (126) and the second one-side mold (128) may be aligned and disposed based on a stepped portion (111) having a relatively recessed surface among the surfaces facing the coated electrode (310A) of the traveling roller (110). The first other-side mold (127) and the second other-side mold (129) may be aligned and disposed based on the other end of the coated electrode (310A).

As described above, the first and second balance members (130, 130a) may be connected, to compensate for the eccentricity of the upper molding jig (123) and the lower molding jig (125). The lengths (R1, R2, R3) of the first and second balance members (130, 130a) may be determined according to the eccentric amount.

Referring to Figures 5 and 6, the center (C5) of the mold part (120) to which the first and second balance members (130, 130a) are coupled is disposed coaxially with the center (M) of the traveling roller (110) in the rotational axis direction.

Furthermore, the first and second balance members (130, 130a) may be provided in multiple members. The first and second balance members (131, 132) may be arranged to be connectable to each other.

As in Figure 9, the upper molding jig (123) and the balance member (130) may be connected to each other using a connecting member (140). Also, the lower molding jig (125) and the balance member (130) may be connected to each other using a connecting member (140).

As in Figure 10, a distance adjustment member (150) may be provided between at least one of the upper molding jig (123) and the lower molding jig (125), and the balance member (130).

Figure 12 is a plan view schematically showing an appearance of a secondary battery (300) manufactured using an electrode manufacturing device (200) and an electrode manufacturing method of the present invention.

Referring to Figures 5 and 12, the secondary battery (300) comprises an electrode assembly (320), an electrolyte (not shown), and a pouch case (360) provided with an accommodating portion (362) in which the electrode assembly (320) is accommodated. Furthermore, the secondary battery (300) comprises an electrode lead portion (330) electrically connected to the electrode assembly (320) and serving as an external terminal. Here, the lead portion (330) may comprise a positive electrode lead (331) and a negative electrode lead (333). The lead portion (330) may be provided with a protective film (340) for electrical insulation between the lead and the pouch case (360).

The electrode assembly (320) comprises an electrode (321) manufactured by the electrode manufacturing device (100) and the electrode manufacturing method (200) of the present invention.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the electrode manufacturing method and the electrode manufacturing device related to at least one example of the present invention, it is possible to flexibly respond to the electrode length changes of the coated electrode upon electrode tab notching.

## Claims

1. An electrode manufacturing device comprising:
a traveling roller for transferring a coated electrode; and
a mold part disposed on a traveling path of the coated electrode and arranged to cut a partial region of the coated electrode, wherein
the mold part comprises an upper mold disposed at the top of the coated electrode and a lower mold disposed at the bottom of the coated electrode,
the upper mold comprises an upper molding jig arranged to cut a partial region of the coated electrode, and one or more first balance members connected to the upper molding jig, and
the upper molding jig is disposed so that its center is deflected from the center of the traveling roller in a rotational axis direction.

2. The electrode manufacturing device according to claim 1, wherein
the upper mold is arranged so that its center is arranged coaxially with the center of the traveling roller in the rotational axis direction.

3. The electrode manufacturing device according to claim 1, wherein
the first balance member is detachably mounted to the upper molding jig.

4. The electrode manufacturing device according to claim 1, wherein
the lower mold comprises a lower molding jig arranged to cut a partial region of the coated electrode, and one or more second balance members connected to the lower molding jig, and
the lower molding jig is disposed so that its center is deflected from the center of the traveling roller in the rotational axis direction.

5. The electrode manufacturing device according to claim 4, wherein
the lower mold is arranged so that its center is arranged coaxially with the center of the traveling roller in the rotational axis direction.

6. The electrode manufacturing device according to claim 4, wherein
the second balance member is detachably mounted to the lower molding jig.

7. The electrode manufacturing device according to claim 4, wherein
the upper molding jig comprises a first one-side mold arranged on one side of the coated electrode to shape an electrode tab on one end of the coated electrode, and a first other-side mold arranged on the other side of the coated electrode to shape the other end of the coated electrode, and
the lower molding jig comprises a second one-side mold arranged on one side of the coated electrode to shape an electrode tab on one end of the coated electrode, and a second other-side mold arranged on the other side of the coated electrode to shape the other end of the coated electrode.

8. The electrode manufacturing device according to claim 4, wherein
the first and second balance members are each provided in multiple members,
the multiple first balance members are arranged to be connectable to each other, and
the multiple second balance members are arranged to be connectable to each other.

9. The electrode manufacturing device according to claim 1, wherein
the upper molding jig and the first balance member are connected to each other using a connecting member.

10. The electrode manufacturing device according to claim 1, further comprising
a distance adjustment member provided between the upper molding jig and the first balance member, and arranged to adjust a gap between the upper molding jig and the first balance member.

11. An electrode manufacturing device comprising:
a traveling roller for transferring a coated electrode; and
a mold part arranged on a traveling path of the coated electrode and arranged to cut a partial region of the coated electrode, wherein
the mold part comprises an upper mold disposed at the top of the coated electrode and a lower mold disposed at the bottom of the coated electrode,
the upper mold comprises an upper molding jig arranged to cut a partial region of the coated electrode, and the lower mold comprises a lower molding jig arranged to cut a partial region of the coated electrode together with the upper molding jig,
the mold part is arranged so that its center is arranged coaxially with the center of the traveling roller in the rotational axis direction, and
each center of the upper molding jig and the lower molding jig is disposed to be deflected based on the center of the traveling roller in the rotational axis direction.

12. The electrode manufacturing device according to claim 11, wherein
the upper molding jig and the lower molding jig are disposed so that each center is deflected toward a direction where an uncoated portion of the coated electrode for an electrode tab to be formed is located.

13. The electrode manufacturing device according to claim 11, wherein
the upper molding jig comprises a first one-side mold arranged on one side of the coated electrode to shape an electrode tab on one end of the coated electrode, and a first other-side mold arranged on the other side of the coated electrode to shape the other end of the coated electrode, and
the lower molding jig comprise a second one-side mold arranged on one side of the coated electrode to shape an electrode tab on one end of the coated electrode, and a second other-side mold arranged on the other side of the coated electrode to shape the other end of the coated electrode.

14. The electrode manufacturing device according to claim 11, wherein
the mold part further comprises a balance member connected to at least one of the upper molding jig and the lower molding jig.

15. The electrode manufacturing device according to claim 14, wherein
the balance member is detachably mounted to at least one of the upper molding jig and the lower molding jig.
